# NEUE EUROPÄISCHE PATENTSCHRIFT

(11) **EP 2 883 769 B2**
(45) Veröffentlichungstag und Bekanntmachung des Hinweises auf die Entscheidung über den Einspruch: **09.03.2022**
(45) Hinweis auf die Patenterteilung: 25.07.2018
(21) Anmeldenummer: 14190052.2
(22) Anmeldetag: 23.10.2014
(51) Int. Cl.: B60W 30/08, B60W 30/09, B62D 15/02

(54) **Verfahren und Vorrichtung zur Querführung eines Kraftfahrzeugs, insbesondere zur Ausweichunterstützung**
Method and device for the lateral guidance of a motor vehicle, in particular for assisting evasive action
Procédé et dispositif destiné au guidage latéral d'un véhicule automobile, en particulier aide à une action d'évitement

(30) Priorität: 12.12.2013 DE 102013225778
(43) Veröffentlichungstag der Anmeldung: 17.06.2015
(73) Patentinhaber: Robert Bosch GmbH, 70442 Stuttgart (DE)
(72) Erfinder: Buerkle, Lutz, 70199 Stuttgart (DE); Gussner, Thomas, 71634 Ludwigsburg (DE); Michalke, Thomas, 70195 Stuttgart (DE); Glaeser, Claudius, 71254 Ditzingen (DE); Maurer, Thomas, 91564 Neuendettelsau (DE)

(56) Entgegenhaltungen:
- WO-A1-2012/045323
- WO-A1-2013/114171
- WO-A1-2013/174577
- DE-A1-102008 028 222
- DE-A1-102011 077 333
- DE-A1-102011 115 353
- US-B2- 7 660 438

## Beschreibung

Die vorliegende Erfindung betrifft ein Verfahren und eine Vorrichtung zur Querführung eines Kraftfahrzeugs, insbesondere zur Ausweichunterstützung eines Kraftfahrzeugs, mit dem eine Kollision vermeidbar ist. Dabei werden mittels eines Objektdetektionssensors Hindernisse erkannt und Informationen bezüglich deren Position zum Fahrzeug und mindestens einer weiteren Eigenschaft ermittelt und die Hindernisse bezüglich ihrer Eigenschaft "überfahrbar" oder "nicht überfahrbar" klassifiziert. Weiterhin wird eine Trajektorie ermittelt, die einen kollisionsfreien Fahrkorridor abseits der detektierten Hindernisse beschreibt und Lenksignale gemäß der Trajektorie bestimmt und an einen Querregler zur Ausweichunterstützung oder zum selbsttätigen Ausweichen des Fahrzeugs ausgibt, wobei die Klassifikation "überfahrbar" oder "nicht überfahrbar" aufgrund der mit dem Objektdetektionssensor ermittelten Höhe des Hindernisses durchgeführt wird.

### Stand der Technik

Aus der DE 10 2006 047 131 A1 ist ein Verfahren zum automatischen Steuern eines Fahrzeugs bekannt, bei dem zur Bereitstellung einer Ausweichtrajektorie des Fahrzeugs vor einem Hindernis Informationen über mindestens eine durch das Fahrzeug frei befahrbare Fläche berücksichtigt wird.

Die WO 2013/175477 A1 offenbart ein Verfahren zum Vermeiden oder Abmildern einer Kollision eines Fahrzeugs mit einem Hindernis in einem Fahrstreifen des Fahrzeugs, wenn das Hindernis einen geplanten Fahrschlauch des Fahrzeugs zumindest teilweise blockiert. Dabei erfolgen ein Erkennen einer Position und/oder Trajektorie des Hindernisses und ein Anpassen des Fahrschlauchs unter Verwendung der Position und/oder der Trajektorie, um die Kollision zu vermeiden oder abzumildern. Ein Bereich kann als befahrbar erkannt werden, auch wenn ein Objekt in dem Bereich erkannt wird, das als zugehörig zu einer vorbestimmten Hindernisklasse eingestuft wird.

Weiterhin sind sowohl aus der DE 10 2008 028222 A1 sowie der DE 10 2011 115353 A1 Verfahren und Vorrichtungen gemäß dem Oberbegriff der unabhängigen Ansprüche bekannt. Aufgabe der Erfindung ist es, ein gegenüber dem Stand der Technik weiter verbessertes Verfahren zur Querführung anzugeben.

Diese Aufgabe wird gelöst durch ein Verfahren und eine Vorrichtung zur Querführung gemäß den unabhängigen Ansprüchen.

### Offenbarung der Erfindung

Der Kern der vorliegenden Erfindung ist es, Hindernisse, die mittels eines Objektdetektionssensors erkannt wurden, aufgrund ihrer ermittelten Höhe in die Klassen "überfahrbar" oder "nicht überfahrbar" zur klassifizieren und aufgrund dieser Klassifikation Trajektorien zur Fahrzeugführung auf kollisionsfreien Fahrkorridoren zu berechnen, wobei erfindungsgemäß vorgesehen ist, dass bei der Trajektorienplanung auch erkannte Objekte überfahren werden dürfen, sofern diese als "überfahrbar" klassifiziert wurden und wenn keine Trajektorie mit kollisionsfreiem Fahrkorridor ermittelbar ist, Hindernisse mit einer Höhe unterhalb eines vorbestimmten Grenzwertes ausgeblendet werden. Erfindungsgemäß wird dieses durch die Merkmale der unabhängigen Ansprüche gelöst. Vorteilhafte Weiterbildungen und Ausgestaltungen ergeben sich aus den Unteransprüchen.

Da erkannte Hindernisse aufgrund ihrer charakteristischen Eigenschaften in die Klassen "überfahrbar" und "nicht überfahrbar" klassifiziert werden, ist es möglich, dass mit einem Querführungssystem, abhängig von der Fahrsituation, Hindernisse geringer Höhe überfahren werden können. Diese Überfahrbarkeit kann bei Hindernissen geringer Höhe auch im Zweifelsfall angenommen werden, falls im Ausweichfall keine andere kollisionsfreie Fahrtrajektorie ermittelbar ist. Damit lässt sich ein Systemverhalten realisieren, das sich an die jeweilige Fahrsituation anpasst und sich an den Erwartungen des Fahrers orientiert. Dabei ist das System nicht nur für Notausweichmanöver zum Verhindern bevorstehender Kollisionen oder zum Abmildern nicht mehr verhinderbarer Kollisionen mit Objekten gedacht, sondern kann auch für die Erhöhung des Fahrkomforts eingesetzt werden. So erwartet der Fahrer beispielsweise, dass ein als Hindernis erkannten Bordstein während einem Einparkmanöver ein überfahrbares Hindernis darstellt, so dass dieser gemäß der Fahrererwartung auch mit geringer Geschwindigkeit während dem Einparkmanöver überfahren werden darf. Der gleiche, als Hindernis erkannte Bordstein kann sich bei höheren Geschwindigkeiten im Fall eines Notausweichmanövers als Hindernis darstellen, das gemäß der Fahrererwartung nicht überfahren werden darf, da ansonsten Fußgänger auf dem benachbarten Gehweg in Mitleidenschaft gezogen werden können oder die weiterer Fahrstabilität während des Notmanövers durch eventuelle Beschädigungen des Fahrzeugs gefährdet ist. Ein Befahren dieses niedrigen Hindernisses in Form eines Bordsteins kann also bei niedrigen Geschwindigkeiten für Komfortfunktionen sinnvoll sein, jedoch bei hohen Geschwindigkeiten vermieden werden und nur im äußersten Notfall befahren werden dürfen.

Vorteilhafterweise ist dabei vorgesehen, dass die mindestens ein weitere Eigenschaft der Hindernisse, die durch den Objektdetektionssensor ermittelt und bereitgestellt wird, die vertikale Ausdehnung des Hindernisses ist. Damit ist die Höhe des oberen Hindernisendes über der Fahrbahnoberfläche gemeint, wodurch beispielsweise ein Kanaldeckel oder eine metallische Getränkedose auf der Fahrbahnoberfläche, die jeweils hervorragende Radarreflexionseigenschaften besitzen, von einem Fahrradfahrer oder einem Schilderpfosten, hinsichtlich deren Überfahrbarkeit unterschieden werden.

Weiterhin ist es vorteilhaft, dass zur Bestimmung der Lenksignale zusätzlich ein Maß für die Kritikalität ermittelt wird, das angibt, wie schnell und/oder mit welcher Intensität die Lenksignale durch den Querregler umzusetzen sind. Insbesondere beim Einsatz des erfindungsgemäßen Systems für Notausweichmanöver gibt die Kritikalität ein Maß dafür an, wie schnell die Lenksignale durch die Aktoreinrichtungen umgesetzt werden müssen, um die momentane Gefahrensituation zu entschärfen.

Weiterhin ist es vorteilhaft, dass zur Bestimmung der Kritikalität der Abstand des eigenen Fahrzeugs zu Hindernissen herangezogen wird. In Kombination hierzu oder als Alternative hierzu kann vorgesehen sein, dass zur Bestimmung der Kritikalität die momentane Fahrzeuggeschwindigkeit herangezogen wird. Sowohl der Abstand des Fahrzeugs zu Hindernissen als auch die momentane Fahrzeuggeschwindigkeit sind jeweils Größen, die die Gefahrensituation charakterisieren, da bei hohen Geschwindigkeiten und niedrigen Abständen eine bevorstehende Kollision verstärkt werden kann. Weiterhin ist es vorteilhaft, dass das Maß für die Kritikalität umso höher gewählt wird, desto geringer der Abstand zwischen dem eigenen Fahrzeug und dem Hindernis ist. Alternativ hierzu oder in Ergänzung hierzu kann weiterhin vorgesehen sein, dass das Maß für die Kritikalität umso höher ist, desto höher die momentane Fahrzeuggeschwindigkeit des eigenen Fahrzeugs ist.

Weiterhin ist es vorteilhaft, dass der vorbestimmte Grenzwert in Abhängigkeit der eigenen Fahrzeuggeschwindigkeit gewählt wird. Dies bedeutet, dass umso höher die eigene momentane Fahrzeuggeschwindigkeit ist, desto kleiner muss der momentane, vorbestimmte Grenzwert sein, da auch kleine überfahrbare Objekte bei größeren Geschwindigkeiten zu Gefährdungen werden können. Umso niedriger die momentane Fahrzeuggeschwindigkeit ist, desto eher können Objekte mit größerer vertikalen Objektausdehnung überfahren werden.

Weiterhin ist es vorteilhaft, dass der vorbestimmte Grenzwert in Abhängigkeit des Annäherungswinkels zwischen dem eigenen Fahrzeug und dem erkannten Hindernis gewählt wird. Überfahrbare Hindernisse, wie beispielsweise Bordsteine, können dann bei Vorliegen einer bestimmten Fahrsituation ausgeblendet werden, so dass bei einer Annäherung kein Systemeingriff erfolgt. Dies ist beispielsweise bei geringer Geschwindigkeit und/oder bei kleinem Annäherungswinkel eher der Fall als bei hohen Geschwindigkeiten oder großen Winkeln zwischen der eigenen Fahrtrajektorie und der Objektgrenzfläche. Auch im Fall eines automatischen Notausweichsystems zur Kollisionsvermeidung wird der Bereich zur Planung der Notausweichtrajektorien durch Bordsteinkanten entlang der Fahrbahn begrenzt. Lediglich in Ausnahmesituationen, also wenn für ein Ausweichmanöver kein ausreichender Fahrkorridor zur Verfügung steht und keine kollisionsvermeidende oder kollisionsmindernde Trajektorie gefunden wird, beispielsweise weil diese durch nicht überfahrbare Hindernisse versperrt sind, kann es dennoch sinnvoll sein, ein Ausweichmanöver über ein überfahrbares Hindernis wie beispielsweise eine Bordsteinkante oder eine Verkehrsinsel auszuführen, wenn anders eine Kollision z.B. mit einem Fußgänger nicht verhindert werden kann. In dieser Ausnahmesituation ermöglicht die Erfindung, dass ein Notausweichmanöver auch über ein überfahrbares Hindernis hinweg ausgeführt werden kann.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuergerät abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Kurze Beschreibung der Zeichnungen

Nachfolgend werden Ausführungsbeispiele der Erfindung anhand von Zeichnungen erläutert. Es zeigen:
- Figur 1: eine beispielhafte Fahrsituation in der das erfindungsgemäße System zum Einsatz kommen kann,
- Figur 2: eine durch den Sensor ausgewertete Objektszene der in Figur 1 beschriebenen Fahrsituation,
- Figur 3: ein Blockschaltbild einer Ausführungsform der erfindungsgemäßen Vorrichtung und
- Figur 4: ein Ablaufdiagramm einer Ausführungsform des erfindungsgemäßen Verfahrens.

### Ausführungsformen der Erfindung

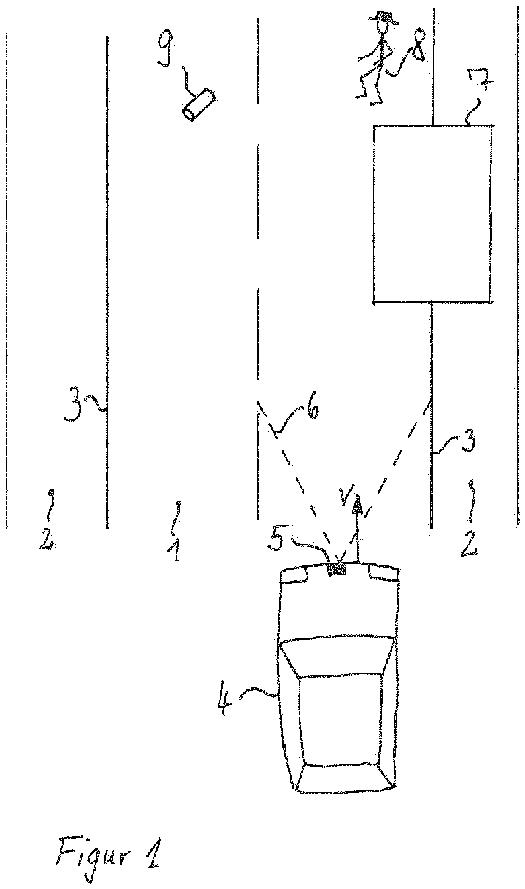

In Figur 1 ist die Fahrbahn 1 einer Straße abgebildet, die in jeder Fahrtrichtung jeweils eine Fahrspur vorsieht. Beiderseits dieser Fahrbahn 1 sind Gehwege 2 vorgesehen, die mittels eines Bordsteins 3 von der Fahrbahn getrennt sind. Bordsteine bilden dabei einen erhöhten Absatz zwischen 10 und 20 Zentimetern Höhe und trennen dabei die Gehwege 2 von der Fahrbahn 1. In der dargestellten Fahrtrichtung fährt auf der Fahrbahn 1 das Fahrzeug 4, das mit dem erfindungsgemäßen System ausgestattet ist. Dieses Fahrzeug 4 bewegt sich dabei mit einer momentanen Geschwindigkeit v fort und ist an der Fahrzeugvorderseite mit einem Objektdetektionssensor 5 ausgestattet. Dieser Objektdetektionssensor kann ein Ultraschall-, Lidar-, Videosensor oder eine Kombination aus diesen Sensorarten sein und nimmt Objekte im Umfeld des Fahrzeugs 4 wahr. Zu diesem Sensor 5 ist schematisch der Sensorsichtbereich 6 eingezeichnet, der den Erfassungsbereich des Objektdetektionssensors 5 darstellt. Der Objektdetektionssensor 5 ist hierbei in der Lage, die relative Position von Objekten sowie deren räumliche Ausdehnung zu erfassen und wertet die Objektgröße und Objektposition dahingehend aus, dass beispielsweise eine Belegungskarte für das Fahrzeugumfeld erstellt wird. Eine derartige Belegungskarte besteht aus einem gitterförmig unterteilten Netz, wobei in jede Zelle des Netzes eingetragen wird, ob an dieser Relativposition bezüglich dem eigenen Fahrzeug 4 ein Objekt detektiert und vermutet wird oder nicht. Aufgrund einer derartigen Belegungskarte kann ein Querführungssystem für Fahrzeuge, das für den Fahrer des Fahrzeugs die Querführungsaufgabe durch Betätigung der Lenkeinrichtung übernimmt, gesteuert werden, indem eine Trajektorie für das Fahrzeug ermittelt wird, die einen Fahrkorridor beschreibt, der nur unbelegte Gitterzellen der Belegungskarte zur Trajektorienplanung benutzt. Weiterhin ist in der Fahrsituation gemäß Figur 1 ein am Fahrbahnrand geparktes Fahrzeug 7 gezeigt. Dieses geparkte Fahrzeug 7 wurde teilweise auf dem angrenzenden Gehweg 2 abgestellt und kann ein Objekt mit großer Höhenausdehnung, beispielsweise ein Kastenwagen oder ein LKW sein. Aufgrund der großen Höhenausdehnung des geparkten Fahrzeugs 7 kann der Fahrer des Fahrzeugs 4 nicht erkennen, dass in Fahrtrichtung gesehen, hinter dem geparkten Fahrzeug 7 ein Fußgänger 8 beabsichtigt, die Fahrbahn 1 zu überqueren. Aufgrund der Verdeckungssituation durch das geparkte Fahrzeug 7 erkennt der Fahrer des Fahrzeugs 4 den querenden Fußgänger 8 erst sehr spät, so dass mittels des Umfeldsensors 5, der die Fahrzeugquerführung steuert, die Kollisionssituation erkannt werden kann. Weiterhin ist auf der Fahrbahn 1 beispielhaft eine Getränkedose 9 dargestellt, die ein Objekt mit geringer Höhenausdehnung repräsentiert.

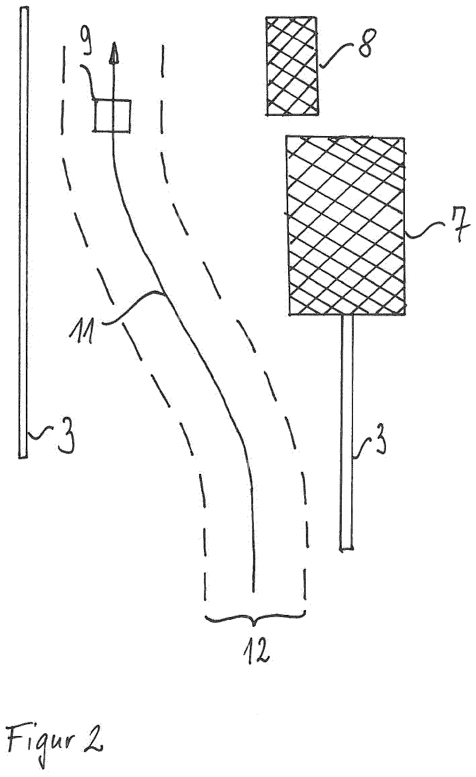

In Figur 2 ist dargestellt, wie der Objektdetektionssensor 5 die Fahrszene gemäß Figur 1 wahrnimmt und auswertet. Hierbei sind die Bordsteine 3 zu erkennen, die mittels des Sensors detektiert wurden und Objekte mit geringer Höhenausdehnung darstellen. Diese Bordsteine 3 trennen dabei die Gehwege 2 von der Fahrbahn 1. Weiterhin ist in Figur 2 das geparkte Fahrzeug 7 dargestellt, das aufgrund seiner Größe durch den Objektdetektionssensor gut erfasst werden kann. Weiterhin ist der querende Fußgänger 8 dargestellt, der in Fahrtrichtung hinter dem geparkten Fahrzeug 7 plötzlich auftaucht und das erfindungsgemäße System zu einem Ausweichmanöver zwingt. Weiterhin ist die ebenfalls als Hindernis erkannte Getränkedose 9 in der linken Hälfte der Fahrbahn 1 dargestellt. Das Fahrzeug 4, das sich mit der Geschwindigkeit v dem geparkten Fahrzeug 7 nähert und plötzlich den querenden Fußgänger 8 erkennt, wird zu einem Ausweichmanöver gezwungen, so dass die vorausgeplante Trajektorie, die ursprünglich fast geradlinig und aufgrund des abgestellten Fahrzeugs 7 nur mit einem leichten Querversatz zur Fahrbahnmitte fortgeführt werden sollte, abgeändert werden muss. Hierbei hat das erfindungsgemäße System die Aufgabe, eine neue Trajektorie zu finden, die eine Kollision mit dem querenden Fußgänger 8 vermeidet. Das Auffinden einer derartigen Trajektorie gestaltet sich in der dargestellten Situation als schwierig, da die Getränkedose 9 als Hindernis auf der Fahrbahn erkannt wurde. Mittels aus dem Stand der Technik bekannten Systemen wird der Fahrzeugquerregelung untersagt, die Getränkedose 9 zu überfahren, wodurch sich eine Ausweichsituation als schwierig gestaltet, da die ebenfalls als Hindernisse erkannten Bordsteine 3 ebenfalls nicht überfahren werden dürfen. Aufgrund der erfindungsgemäßen Ausgestaltung des Systems wird erkannt, dass es sich bei der Getränkedose 9 um ein Hindernis mit geringer Höhenausdehnung handelt und dieses als "überfahrbar" klassifiziert wurde.

Im Gegensatz hierzu wurde der querende Fußgänger 8 sowie das am Fahrbahnrand geparkte Fahrzeug 7 aufgrund ihrer Höhenausdehnung als "nicht überfahrbare" Objekte klassifiziert, was durch eine karierte Schraffur der Objektsymbole 7, 8 in Figur 2 dargestellt ist. Dagegen wurden die linken und rechten Bordsteine 3, die ebenfalls als Hindernis erkannt wurden, als Hindernisse "überfahrbar" klassifiziert, sollen jedoch aufgrund der höheren Geschwindigkeit v des Fahrzeugs 4 in dieser Situation nicht oder nur im äußersten Notfall überfahren werden dürfen. Aufgrund dieser Auswertung der Objekthöheninformation wird die Getränkedose 9 ausgeblendet und es wird eine Ausweichtrajektorie 11 berechnet, gemäß der das Fahrzeug 4 auf die Gegenfahrbahn ausweicht und somit ausreichend Platz lässt, um eine Kollision oder eine Gefährdung des querenden Fußgängers 8 zu vermeiden. Weiterhin ist in Figur 2 der Fahrkorridor 12 eingezeichnet, der sich gemäß der Trajektorie 11 ergibt. Die Trajektorie 11 bildet dabei die Fahrzeugspur, die ein auf die Fahrbahn projizierter Punkt der Fahrzeugmitte hinterlassen würde. Wird diese Trajektorie 11 durch das Fahrzeug 4 abgefahren, so ergibt sich ein wesentlich breiterer Platzbedarf, der durch den Fahrkorridor 12 dargestellt wird und im wesentlichen den linken und rechten Fahrzeugrand entlang der Trajektorie 11 darstellt. Aufgrund der Ausblendung des Hindernisses 9 konnte damit erfindungsgemäß eine Kollisionssituation mit dem plötzlich auftauchenden, die Straße querenden Fußgänger 8 vermieden werden. Wäre die Getränkedose 9 jedoch ein weiterer Fußgänger gewesen, der eine entsprechend große Höhenausdehnung aufweisen würde, so wäre das Hindernis 9 als "nicht überfahrbar" klassifiziert worden, so dass die in Figur 1 eingezeichnete Trajektorie 11 in der dargestellten Weise nicht möglich gewesen wäre. In diesem Fall, der eine Abwandlung der in Figur 1 dargestellten Situation darstellt, in dem eben keine kollisionsfreie Trajektorie ermittelbar gewesen wäre, wäre auch ein Ausblenden des Bordsteins möglich geworden, so dass eine mögliche Ausweichtrajektorie 11 gemäß dieser abgewandelten Variante auch den linken Gehweg 2 zum Ausweichen genutzt hätte.

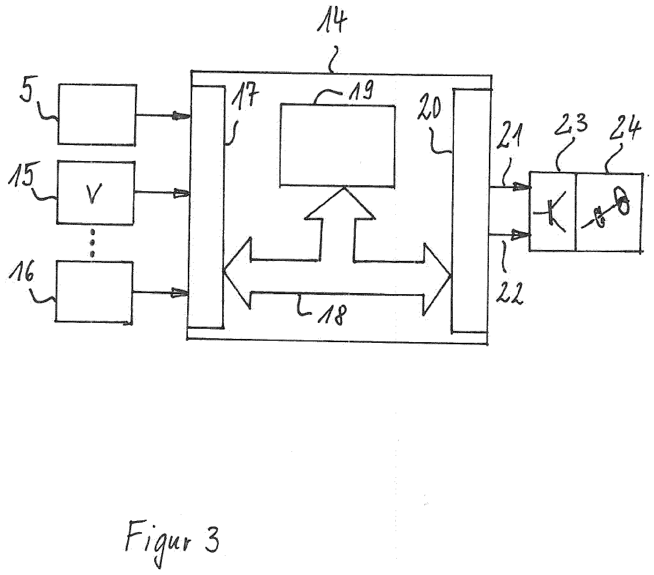

In Figur 3 ist ein Blockschaltbild einer Ausführungsform der erfindungsgemäßen Vorrichtung dargestellt. Zu erkennen ist die Verarbeitungsvorrichtung 14, die als Steuergerät im Fahrzeug 4 untergebracht ist oder als Teil eines vorhandenen Steuergeräts realisiert wird. Die Verarbeitungsvorrichtung 14 weist eine Eingangsschaltung 17 auf, mittels der der Verarbeitungseinrichtung 14 Eingangssignale zuführbar sind. Der Verarbeitungsvorrichtung 14 werden mittels der Eingangsschaltung 17 Signale eines Objektdetektionssensor 5 zugeführt. Dieser Objektdetektionssensor 5 ist ein an der Fahrzeugfront des Fahrzeugs 4 angebrachter Sensor, der mittels Ultraschall, Lidar, Radar, Video oder einer Kombination der beschriebenen Sensortechnologien Hindernisse im Fahrzeugumfeld erkennen und auswerten kann. Hierzu wird die relative Position der Objekte zum Fahrzeug 4 sowie deren vertikale und horizontale Ausdehnung ermittelt und der Eingangsschaltung 17 übertragen. Weiterhin wird der Eingangsschaltung 17 das Ausgangssignal eines Geschwindigkeitssensors 15 zugeführt, der die momentane Fahrzeuggeschwindigkeit v des Fahrzeugs 4 erfasst und der erfindungsgemäßen Vorrichtung zur Verfügung stellt. Darüber hinaus sind noch weitere Sensoren 16 vorsehbar, die optional hinzugefügt werden können. Insbesondere im Fall, dass die Umfeldsensorik aus einer Kombination verschiedener Sensorarten besteht, können der Eingangsschaltung 17 Ausgangssignale weiterer Sensoren 16 zugeführt werden. Die Eingangsschaltung 17 der die Eingangssignale der Sensoren 5, 15, 16 zugeführt wurden, leitet diese mittels einer Datenaustauscheinrichtung 18, die insbesondere als Bussystem ausgeführt sein kann einer Berechnungseinrichtung 19 weiter. In der Berechnungseinrichtung 19, die vorteilhaft als Mikroprozessor als Signalprozessor ausgeführt sein kann, läuft das erfindungsgemäße Verfahren in der Form eines Algorithmusses ab und ermittelt hierbei aus den Eingangssignalen neue Ausgangssignale, mittels denen die geplanten Fahrtrajektorien durch nachgeschaltete Aktoreinrichtungen befahren werden können. Die durch die Berechnungseinrichtung 19 ermittelten Ausgangssignale, die im vorliegenden Fall insbesondere aus einem Lenksignal 21 sowie einem Kritikalitätssignal 22 bestehen, werden über eine Datenaustauscheinrichtung 18, die wiederum als Bussystem ausgeführt sein kann, einer Ausgangsschaltung 20 zugeführt, die die Ausgangssignale der Verarbeitungsvorrichtung 14 an nachgeordnete Stellglieder ausgibt. Die Ausgangsschaltung 20 gibt an den Querregler 23, der Signale in Lenkmomente der Fahrzeuglenkanlage umsetzt, die Ausgangssignale weiter, die im vorliegenden Beispiel aus dem Lenksignal 21 und dem Kritikalitätssignal 22 bestehen. Das Lenksignal 21 gibt hierbei an, zu welchem Zeitpunkt und wie stark die Auslenkung der Lenkeinrichtung vorgesehen ist. Das Kritikalitätssignal 22 gibt hierbei vor, wie schnell die Lenksignale 21 durch den Querregler 23 und die Lenkeinrichtung 24 in Lenkbewegungen des Fahrzeugs 4 umgesetzt werden sollen.

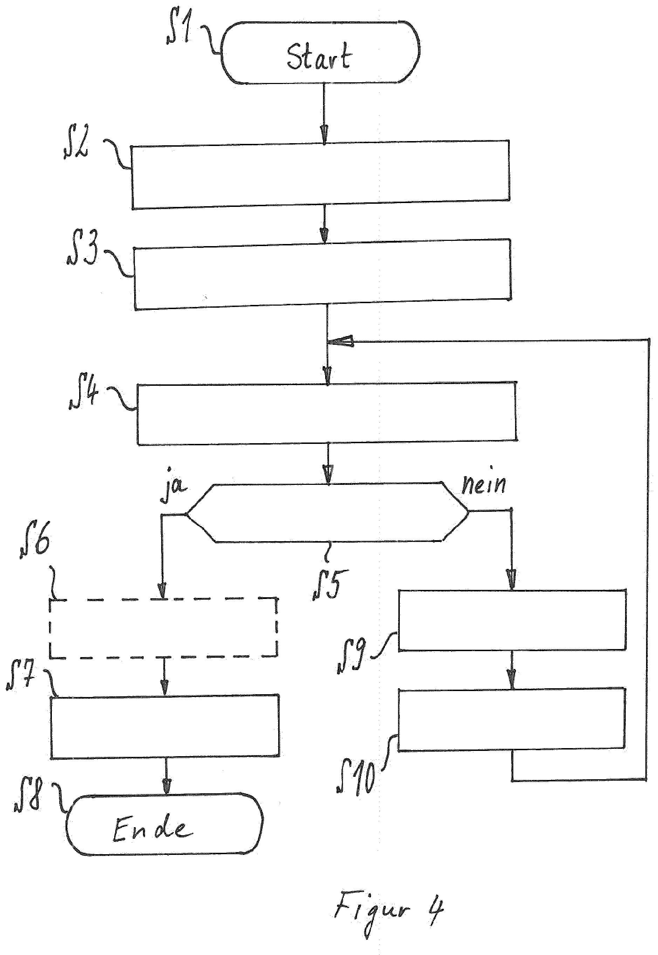

In Figur 4 ist ein beispielhafter Ablauf des erfindungsgemäßen Verfahrens gezeigt, das in Schritt S1, beispielsweise mit Aktivierung einer Querführungsunterstützung durch den Fahrer begonnen wird. Im darauffolgenden Schritt S2 werden Objektdaten von der Objektdetektionssensorik 5 über die Eingangsschaltung 17 eingelesen. Diese Objektdaten beinhalten Informationen bezüglich der relativen Position der Objekte zum eigenen Fahrzeug 4, die horizontale und vertikale Ausdehnung der Objekte sowie vorausgesagte Bewegungsrichtungen und Bewegungsgeschwindigkeiten. Im nächsten Schritt S3 wird aus den vorhandenen Objektdaten eine Belegungskarte gefüllt und aktualisiert, in dem die Gitterzellen der Belegungskarte mit Informationen gefüllt werden, ob in dieser Gitterzelle ein Objekt erkannt wurde oder nicht. Weiterhin wird für die jeweiligen Objekte ein bestimmter Höhenwert erfasst und abgespeichert. Aus dieser Belegungskarte ergibt sich eine Art grober Umfeldplan, auf deren Grundlage im darauffolgenden Schritt S4 eine Trajektorie für einen kollisionsfreien Fahrkorridor des Fahrzeugs 4 gesucht und berechnet wird. Wurde eine Trajektorie gefunden, die einen kollisionsfreien Fahrkorridor beschreibt, so verzweigt das Verfahren in Schritt S5 nach ,ja" und es wird in einen nachgeschalteten, optionalen Schritt S6 ermittelt, mit welcher Kritikalität diese Trajektorie durch die Aktoreinrichtungein einzuregeln ist. Wurde in Schritt S5 keine Trajektorie gefunden, die einen kollisionsfreien Fahrkorridor für das Fahrzeug 4 zulässt, so verzweigt Schritt S5 nach "nein" und wird in Schritt S9 fortgeführt. In Schritt S9 wird ein Grenzwert für Objektausblendungen festgelegt. Dieser Grenzwert beschreibt eine Objekthöhe, wonach alle Objekte mit einem Höhenwert kleiner dem Grenzwert aus der Berechnung einer Trajektorie für einen kollisionsfreien Fahrkorridor ausgeblendet werden, indem diese Objekte mit Höhenwerten kleiner dem Grenzwert von der Klassifikation "nicht überfahrbar" in "überfahrbar" geändert werden. In Schritt S10 werden daraufhin die Objekte mit einem kleineren Höhenwert als dem Grenzwert ausgeblendet und das Verfahren verzweigt zurück nach Schritt S4, in dem erneut versucht wird, eine Trajektorie mit einem kollisionsfreien Fahrkorridor für das Fahrzeug 4 zu finden. Wurde nach diesem erneuten Durchlaufen des Schritts S4 nun ein kollisionsfreier Fahrkorridor gefunden, so verzweigt das Verfahren in Schritt S5 nach ,ja", ansonsten verzweigt das Verfahren wiederum nach "nein" und es wird in Schritt S9 ein neuer Grenzwert festgelegt, der nun eine Ausblendung von Objekten mit größerem Höhenwert vornimmt, als im vorherigen Durchlauf dieses Schrittes. Damit wird im Verfahren bei der Suche nach einer kollisionsfreien Ausweichtrajektorie mit einer Trajektoriensuche begonnen, in dem nur sehr niedrige Hindernisse überfahren werden dürfen. Ist die Fahrsituation derart komplex, dass sich hierbei keine kollisionsfreie Ausweichtrajektorie finden lässt, so wird bei jeder Iteration der Schleife zwischen Schritt S5 und Schritt S4 der Grenzwert für die Objektausblendung zu größeren Höhenwerten erhöht, so dass Schritt um Schritt mehr Objekte ausgeblendet werden und die Wahrscheinlichkeit, eine kollisionsfreie Trajektorie zu erhalten steigt. Diese Iteration wird so lange fortgesetzt, bis eine kollisionsfreie Ausweichtrajektorie in Schritt S5 gefunden wurde und das Verfahren im ,ja" fortgeführt wird, indem gemäß Schritt S7 die Lenksignale gemäß der berechneten Trajektorie mit kollisionsfreiem Fahrkorridor an den nachgeordneten Querregler zur Ausgabe an die Lenkaktorik ausgegeben wird. Im Fall des optionalen Schrittes S6, wonach zusätzlich ein Kritikalitätswert ermittelt wird, der angibt, wie schnell die Lenksignale durch den Querregler und die Lenkaktorik einzuregeln sind, wird in Schritt S7 zusätzlich noch der Kritikalitätswert an den Querregler ausgegeben. Der optionale Schritt S6, der die Ermittlung eines Kritikalitätswertes vorsieht, kann alternativ auch an einer anderen Stelle des Ablaufdiagramms eingefügt werden, ohne hierbei die erfinderische Idee wesentlich zu verändern. Nach der Ausgabe der Lenksignale und der eventuell vorhandenen Kritikalitätswerte an den Querregler endet der Algorithmus in Schritt S8 und kann wieder von Neuem bei Schritt S1 begonnen werden, beispielsweise indem im weiteren Fahrverlauf eine neue Fahrsituation auftritt und eine neue Fahrtrajektorie berechnet werden muss.

## Patentansprüche

1. Verfahren zur Querführung eines Kraftfahrzeugs (4), insbesondere zur Ausweichunterstützung eines Kraftfahrzeugs (4) um eine Kollision zu vermeiden oder eine nichtvermeidbare Kollision zu mildern,
wobei mittels eines Objektsdetektionssensors (5) Hindernisse (3, 7, 8, 9) erkannt und Informationen bezüglich deren Position zum Kraftfahrzeug (4) und bezüglich mindestens einer weiteren Eigenschaft ermittelt werden,
die Hindernisse (3, 7, 8, 9) bezüglich Ihrer Eigenschaft "überfahrbar" oder "nicht überfahrbar" klassifiziert werden
aufgrund dieser Klassifizierung eine Trajektorie (11) für das Kraftfahrzeug (4) ermittelt wird, die einen kollisionsfreien Fahrkorridor (12) abseits der detektierten Hindernisse (3, 7, 8, 9) beschreibt, wobei beim Ermitteln der Trajektorie auch erkannte Hindernisse (3, 7, 8, 9) überfahren werden dürfen, die als "überfahrbar" klassifiziert wurden, und
Lenksignale gemäß der Trajektorie (11) bestimmt und an einen Querregler (23) zur Ausweichunterstützung oder zum selbsttätigen Ausweichen des Kraftfahrzeugs (4) ausgegeben werden,
wobei die Klassifikation "überfahrbar" oder "nicht überfahrbar" aufgrund der mit dem Objektdetektionssensor (5) ermittelten Höhe des Hindernisses (3, 7, 8, 9) durchgeführt wird,
**dadurch gekennzeichnet,**
**dass** wenn keine Trajektorie (11) mit kollisionsfreiem Fahrkorridor (12) ermittelbar ist, die nicht überfahrbaren Hindernisse (3, 7, 8, 9) mit einer Höhe unterhalb eines vorbestimmten Grenzwertes ausgeblendet werden,
indem diese nicht überfahrbaren Hindernisse mit der Höhe unterhalb des vorbestimmten Grenzwertes von der Klassifikation "nicht überfahrbar" in "überfahrbar" geändert werden.
,

2. Verfahren nach Anspruch 1, **dadurch gekennzeichnet, dass** nur die Hindernisse (3, 7, 8, 9) mit einer Höhe unterhalb eines vorbestimmten Grenzwertes ausgeblendet werden, die an eine befahrbare Fläche angrenzen.

3. Verfahren nach Anspruch 1 oder 2, **dadurch gekennzeichnet, dass** der vorbestimmte Grenzwert in Abhängigkeit der eigenen Fahrzeuggeschwindigkeit gewählt wird.

4. Verfahren nach einem der Ansprüche 1 bis 3, **dadurch gekennzeichnet, dass** der vorbestimmte Grenzwert in Abhängigkeit des Annäherungswinkels zwischen dem Kraftfahrzeug (4) und dem erkannten Hindernis (3, 7, 8, 9) gewählt wird.

5. Verfahren nach Anspruch 1, **dadurch gekennzeichnet, dass** die mindestens eine weitere Eigenschaft der Hindernisse (3, 7, 8, 9), die durch den Objektdetektionssensor (5) ermittelt und bereitgestellt wird, die vertikale Ausdehnung des Hindernisses (3, 7, 8, 9) ist.

6. Verfahren nach Anspruch 1 oder 5, **dadurch gekennzeichnet, dass** zur Bestimmung der Lenksignale zusätzlich ein Maß für die Kritikalität ermittelt wird, das angibt, wie schnell und/oder mit welcher Intensität die Lenksignale (21) durch den Querregler (23) umzusetzen sind.

7. Verfahren nach Anspruch 6,, **dadurch gekennzeichnet, dass** zur Bestimmung der Kritikalität
- der Abstand des Kraftfahrzeugs (4) zu den Hindernissen (3, 7, 8, 9) und/oder
- die momentane Fahrzeuggeschwindigkeit herangezogen wird.

8. Verfahren nach Anspruch 6 oder 7, **dadurch gekennzeichnet, dass** das Maß für die Kritikalität umso höher ist,
- desto geringer der Abstand zwischen dem Kraftfahrzeug (4) und dem Hindernis (3, 7, 8, 9) und/oder
- desto höher die Fahrzeuggeschwindigkeit ist.

9. Vorrichtung zur Querführung eines Kraftfahrzeugs (4), insbesondere Vorrichtung zur Ausweichunterstützung eines Kraftfahrzeugs (4) um eine Kollision zu vermeiden,
wobei ein Objektsdetektionssensor (5) vorgesehen ist, der Hindernisse (3, 7, 8, 9) erkennt und Informationen bezüglich deren Position zum Kraftfahrzeug (4) und mindestens einer weiteren Eigenschaft zur Verfügung stellt,
ein Klassifikator vorgesehen ist, der die Hindernisse (3, 7, 8, 9) bezüglich Ihrer Eigenschaft "überfahrbar" oder "nicht überfahrbar" klassifiziert,
eine Trajektorienplanungseinrichtung vorgesehen ist, die aufgrund dieser Klassifizierung eine Trajektorie (11) ermittelt, die einen kollisionsfreien Fahrkorridor (12) abseits der detektierten Hindernisse (3, 7, 8, 9) beschreibt, wobei beim Ermitteln der Trajektorie auch erkannte Hindernisse (3, 7, 8, 9) überfahren werden dürfen, die als "überfahrbar" klassifiziert wurden, und
ein Querregler (23) vorgesehen ist, der Lenksignale (21) gemäß der Trajektorie (11) bestimmt und an eine Lenkvorrichtung (24) zur Ausweichunterstützung oder zum selbsttätigen Ausweichen des Kraftfahrzeugs (4) ausgibt,
wobei im Klassifikator die Klassifikation "überfahrbar" oder "nicht überfahrbar" aufgrund der vom Objektdetektionssensor (5) ermittelten Höhe des Hindernisses (3, 7, 8, 9) durchgeführt wird,
**dadurch gekennzeichnet,**
**dass** wenn keine Trajektorie (11) mit kollisionsfreiem Fahrkorridor (12) ermittelbar ist, die nicht überfahrbaren Hindernisse (3, 7, 8, 9) mit einer Höhe unterhalb eines vorbestimmten Grenzwertes ausgeblendet werden;
indem diese nicht überfahrbaren Hindernisse mit der Höhe unterhalb des vorbestimmten Grenzwertes von der Klassifikation "nicht überfahrbar" in "überfahrbar" geändert werden.

## Claims

1. Method for laterally guiding a motor vehicle (4), in particular for assisting a motor vehicle (4) with avoidance, in order to avoid a collision or mitigate an unavoidable collision,
wherein obstacles (3, 7, 8, 9) are detected and information relating to the position of said obstacles with respect to the motor vehicle (4) and relating to at least one further property is determined by means of an object detection sensor (5),
the obstacles (3, 7, 8, 9) are classified as "can be driven over" or "cannot be driven over" with regard to their property,
a trajectory (11) describing a collision-free driving corridor (12) away from the detected obstacles (3, 7, 8, 9) is determined for the motor vehicle (4) based on this classification, wherein detected obstacles (3, 7, 8, 9) that have been classified as "can be driven over" can also be driven over when determining the trajectory, steering signals are determined according to the trajectory (11) and are output to a lateral controller (23) for assisting with the avoidance or for the automatic avoidance by the motor vehicle (4),
wherein the classification "can be driven over" or "cannot be driven over" is carried out on the basis of the height of the obstacle (3, 7, 8, 9) determined using the object detection sensor (5), **characterized in that**,
if it is not possible to determine a trajectory (11) with a collision-free driving corridor (12), the obstacles (3, 7, 8, 9) that cannot be driven over with a height below a predetermined limit value are hidden
by changing these obstacles that cannot be driven over with the height below the predetermined limit value from the classification "cannot be driven over" to "can be driven over".

2. Method according to Claim 1, **characterized in that** only those obstacles (3, 7, 8, 9) with a height below a predetermined limit value which adjoin a navigable area are hidden.

3. Method according to Claim 1 or 2, **characterized in that** the predetermined limit value is selected on the basis of the vehicle's own speed.

4. Method according to one of Claims 1 to 3, **characterized in that** the predetermined limit value is selected on the basis of the approach angle between the motor vehicle (4) and the detected obstacle (3, 7, 8, 9).

5. Method according to Claim 1, **characterized in that** the at least one further property of the obstacles (3, 7, 8, 9) which is determined and provided by the object detection sensor (5) is the vertical extent of the obstacle (3, 7, 8, 9).

6. Method according to Claim 1 or 5, **characterized in that**, in order to determine the steering signals, a measure of the criticality is additionally determined, which measure indicates how quickly and/or with which intensity the steering signals (21) should be implemented by the lateral controller (23).

7. Method according to Claim 6, **characterized in that**
- the distance between the motor vehicle (4) and the obstacles (3, 7, 8, 9) and/or
- the instantaneous vehicle speed
is/are used to determine the criticality.

8. Method according to Claim 6 or 7, **characterized in that** the measure of the criticality is higher
- the shorter the distance between the motor vehicle (4) and the obstacle (3, 7, 8, 9) and/or
- the higher the vehicle speed.

9. Apparatus for laterally guiding a motor vehicle (4), in particular apparatus for assisting a motor vehicle (4) with avoidance, in order to avoid a collision,
wherein an object detection sensor (5) is provided and detects obstacles (3, 7, 8, 9) and provides information relating to the position of said obstacles with respect to the motor vehicle (4) and at least one further property,
a classifier is provided and classifies the obstacles (3, 7, 8, 9) as "can be driven over" or "cannot be driven over" with regard to their property,
a trajectory planning device is provided and determines a trajectory (11) describing a collision-free driving corridor (12) away from the detected obstacles (3, 7, 8, 9) based on this classification, wherein detected obstacles (3, 7, 8, 9) that have been classified as "can be driven over" can also be driven over when determining the trajectory,
a lateral controller (23) is provided and determines steering signals (21) according to the trajectory (11) and outputs them to a steering apparatus (24) for assisting with the avoidance or for the automatic avoidance by the motor vehicle (4),
wherein the classification of "can be driven over" or "cannot be driven over" is carried out in the classifier on the basis of the height of the obstacle (3, 7, 8, 9) determined by the object detection sensor (5),
**characterized in that**,
if it is not possible to determine a trajectory (11) with a collision-free driving corridor (12), the obstacles (3, 7, 8, 9) that cannot be driven over with a height below a predetermined limit value are hidden;
by changing these obstacles that cannot be driven over with the height below the predetermined limit value from the classification "cannot be driven over" to "can be driven over".

## Revendications

1. Procédé de guidage transversal d'un véhicule automobile (4), notamment d'assistance à l'évitement d'un véhicule automobile (4) afin d'éviter une collision ou atténuer une collision inévitable,
des obstacles (3, 7, 8, 9) étant reconnus au moyen d'un capteur de détection d'objets (5) et des informations concernant leur position par rapport au véhicule automobile (4) et concernant au moins une propriété supplémentaire étant déterminées,
les obstacles (3, 7, 8, 9) étant classifiés comme « franchissables » ou « non franchissables » en référence à leur propriété,
une trajectoire (11) pour le véhicule automobile (4) étant déterminée sur la base de sa classification, laquelle décrit un corridor de circulation (12) exempt de collision à l'écart des obstacles (3, 7, 8, 9) détectés, dans lequel dans la détermination de la trajectoire, également des obstacles (3, 7, 8, 9) détectés peuvent être franchis, qui ont été classifiés « franchissables », et
des signaux de direction étant définis conformément à la trajectoire (11) et délivrés à un régulateur transversal (23) servant à l'assistance à l'évitement ou destiné à l'évitement automatique du véhicule automobile (4),
la classification « franchissable » ou « non franchissable » étant effectuée sur la base de la hauteur de l'obstacle (3, 7, 8, 9) déterminée avec le capteur de détection d'objets (5),
**caractérisé en ce que** lorsqu'il n'est pas possible de déterminer une trajectoire (11) avec un corridor de circulation (12) exempt de collision, les obstacles (3, 7, 8, 9) non franchis ayant une hauteur inférieure à une valeur limite prédéfinie sont masqués dans lequel ces obstacles non franchis ayant une hauteur inférieure à une valeur limite prédéfinie sont changés de la classification « non franchissables » à « franchissables ».

2. Procédé selon la revendication 1, **caractérisé en ce que** seuls sont masqués les obstacles (3, 7, 8, 9) ayant une hauteur inférieure à une valeur limite prédéfinie qui sont contigus à une surface carrossable.

3. Procédé selon la revendication 1 ou 2, **caractérisé en ce que** la valeur limite prédéfinie est choisie en fonction de la vitesse propre du véhicule.

4. Procédé selon l'une des revendications 1 à 3, **caractérisé en ce que** la valeur limite prédéfinie est choisie en fonction de l'angle d'approche entre le véhicule automobile (4) et l'obstacle (3, 7, 8, 9) reconnu.

5. Procédé selon la revendication 1, **caractérisé en ce que** l'au moins une propriété supplémentaire des obstacles (3, 7, 8, 9) qui est déterminée et mise à disposition par le capteur de détection d'objets (5) est la dimension verticale de l'obstacle (3, 7, 8, 9).

6. Procédé selon la revendication 1 ou 5, **caractérisé en ce qu'**un indice de caractère critique est en plus déterminé pour la définition des signaux de direction, lequel indique la rapidité et/ou l'intensité avec lesquelles les signaux de direction (21) doivent être convertis par le régulateur transversal (23).

7. Procédé selon la revendication 6, **caractérisé en ce que** la définition du caractère critique s'effectue en utilisant
- la distance entre le véhicule automobile (4) et les obstacles (3, 7, 8, 9) et/ou
- la vitesse momentanée du véhicule.

8. Procédé selon la revendication 6 ou 7, **caractérisé en ce que** l'indice de caractère critique est d'autant plus grand
- que la distance entre le véhicule automobile (4) et les obstacles (3, 7, 8, 9) est faible et/ou
- que la vitesse momentanée du véhicule est élevée.

9. Dispositif de guidage transversal d'un véhicule automobile (4), notamment dispositif d'assistance à l'évitement d'un véhicule automobile (4) afin d'éviter une collision,
un capteur de détection d'objets (5) étant présent, lequel reconnaît des obstacles (3, 7, 8, 9) et met à disposition des informations concernant leur position par rapport au véhicule automobile (4) et au moins une propriété supplémentaire,
un classificateur étant présent, lequel classifie les obstacles (3, 7, 8, 9) comme « franchissables » ou « non franchissables » en référence à leur propriété, un appareil de planification de trajectoire étant présent, lequel détermine, sur la base de cette classification, une trajectoire (11) pour le véhicule automobile, laquelle décrit un corridor de circulation (12) exempt de collision à l'écart des obstacles (3, 7, 8, 9) détectés, dans lequel dans la détermination de la trajectoire, également des obstacles (3, 7, 8, 9) détectés peuvent être franchis, qui ont été classifiés « franchissables », et
un régulateur transversal (23) étant présent, lequel définit des signaux de direction (21) conformément à la trajectoire (11) et les délivre à un dispositif de direction (24) servant à l'assistance à l'évitement ou destiné à l'évitement automatique du véhicule automobile (4),
la classification « franchissable » ou « non franchissable » étant effectuée dans le classificateur sur la base de la hauteur de l'obstacle (3, 7, 8, 9) déterminée par le capteur de détection d'objets (5), **caractérisé en ce que** lorsqu'il n'est pas possible de déterminer une trajectoire (11) avec un corridor de circulation (12) exempt de collision, les obstacles (3, 7, 8, 9) ayant une hauteur inférieure à une valeur limite prédéfinie sont masqués ;
dans lequel ces obstacles non franchis ayant une hauteur inférieure à une valeur limite prédéfinie sont changés de la classification « non franchissables » à « franchissables ».
